# EUROPEAN PATENT SPECIFICATION

(11) **EP 0 541 292 B1**
(45) Date of publication and mention of the grant of the patent: **14.01.1998**
(21) Application number: 92309911.3
(22) Date of filing: 29.10.1992
(51) Int. Cl.: G06K 7/10

(54) **Optical scanner apparatus and method of programming**
Optisches Abtastgerät und Verfahren zu seiner Programmierung
Appareil de balayage optique et méthode pour sa programmation

(30) Priority: 05.11.1991 US 788053
(43) Date of publication of application: 12.05.1993
(73) Proprietor: NCR International, Inc., Dayton, Ohio 45479 (US)
(72) Inventor: Wike, Charles K., Jr., Sugar Hill, Georgia 30518 (US); Ames, Stephen J., Lawrenceville, Georgia 20243 (US); Belknap, William M., Lawrenceville, Georgia 30244 (US); Aleshire, Rex A., Duluth, Georgia 30136 (US); Detwiler, Deborah A., Lawrenceville, Georgia 30244 (US)
(74) Representative: Irish, Vivien Elizabeth

(56) References cited:
- EP-A- 0 094 571
- EP-A- 0 217 665
- EP-A- 0 323 848
- WO-A-92/05515
- GB-A- 2 196 203
- US-A- 4 766 297

## Description

The present invention relates to optical scanner apparatus and a method of programming such apparatus.

Optical scanners are well known for their usefulness in retail checkout and inventory control. They may be mounted within checkout counters, free-standing, or hand-held.

Optical scanners may also be programmable. Tags containing program information encoded into bar code labels may be used to program a scanner. Known programming methods employ one function per tag. While this method works well, the total number of tags becomes unmanageable as more functions are added.

One scanner may be used to program another. The receiving scanner detects the laser beam emitted from the emitting scanner. While this method works well, diffuser plates must be employed between the emitter and the receiver. Furthermore, the scanners must be configured in a non-scanning mode, a mode which is not certifiable as complying with safety regulations.

Optical scanners employ a variety of energizing devices that seek to energize the scanner lazer upon correct positioning of the article to be scanned. Some such devices use triggers, switches or presence sensors, such as ambient light sensors and motion sensors, to determine when an article is moved into the scan region. Energizing devices are often used in combination with a timing circuit for deenergizing the scanner after a predetermined time period.

Known energizing devices are disadvantageously restricted in that they require preparatory movements, in order to energize the scanner and the reliability is also restricted due to erroneous operation of the switch or sensor means.

EP-A-O 323 848 discloses an image reading device comprising a housing, a scan module for producing a scan pattern transmitting the scan pattern through a window means in the housing to a scan region outside of the window means. The device also includes a detector means for detecting the passage of an article to be scanned into the scan region and for producing a signal for initiating operation of the scan module upon detection of the article. The detector means includes a secondary light source such as, for example, a semiconductor laser, which is used to detect the presence of the article prior to a more powerful scanning means, for example a gas laser, being actuated to scan the article.

It is an object of the present invention to provide scanner apparatus which does not exhibit the above-mentioned disadvantages.

According to one aspect of the present invention, there is provided an optical scanner apparatus (10) comprising a housing, a scan module (12) for producing a scan pattern and directing said pattern through window means (60) in said housing to a scan region outside of said window means (60), first detector means (15) for detecting the passage of an article (64) to be scanned into said scan region and for providing a signal for initiating operation of said scan module (12) upon detection of said article (64), characterized by said first detector means (15) comprising light source means (56) arranged to generate a diffuse output (61) and to project said diffuse output (61) into said scan region, modulation means (55) for modulating said diffuse output (61), and second detector means (54), which are part of said first detector means (15), for initiating operation of said scan module, in response to detection of the modulated light output (61) reflected from said article (64), as said article (64) enters said scan region and wherein said light source means (56) is adapted to transmit a scanner-programming signal for programming another scanner apparatus when the optical scanner (10) apparatus is in a programming mode.

The invention advantageously provides for a presence sensing circuit in an optical scanner which employs internal sensors, which may also be used to program other scanners, and whose sensing volume is coextensive with the scanning volume.

According to a particularly advantageous feature of the present invention, the volume of space occupied by the diffused light from the infrared LED substantially encompasses a second volume of space occupied by the scan pattern emitted by the optical scanner. Thus, the scan module is activated about the same time that an item enters the scan volume.

The automatic sensing and programming circuit of the present invention allows one scanner to program another scanner without using the laser diode of the scan module. Tags containing bar code labels for configuring the scanners as emitter and receiver are scanned by the respective scanners. These tags deenergize the scan modules of both scanners. Before programming, the scanners are oriented to face each other. The emitting scanner emits a plurality of pulse trains to be stored by the receiving scanner, each pulse train representing a hexadecimal digit and each pulse train including a predetermined number of binary pulses. In combination, the pulse trains represent a predetermined function or set of functions. The controller implements an algorithm for decoding the pulses trains.

The invention is advantageous in that it provides a method for programming one scanner from another using the combined sensing and programming circuit of the present invention.

The invention is described further hereinafter, by way of example only, with reference to the accompanying drawings in which:
Fig. 1 is a schematic representation of an optical scanner embodying the present invention;
Fig. 2 is a block diagram of an automatic sensing and programming circuit of the present invention;
Fig.3 is a side view of the volumes illuminated by the scanner and an automatic sensing and programming circuit embodying the present invention; and
Fig.4 is a flow diagram of a sensing method embodying the present invention.

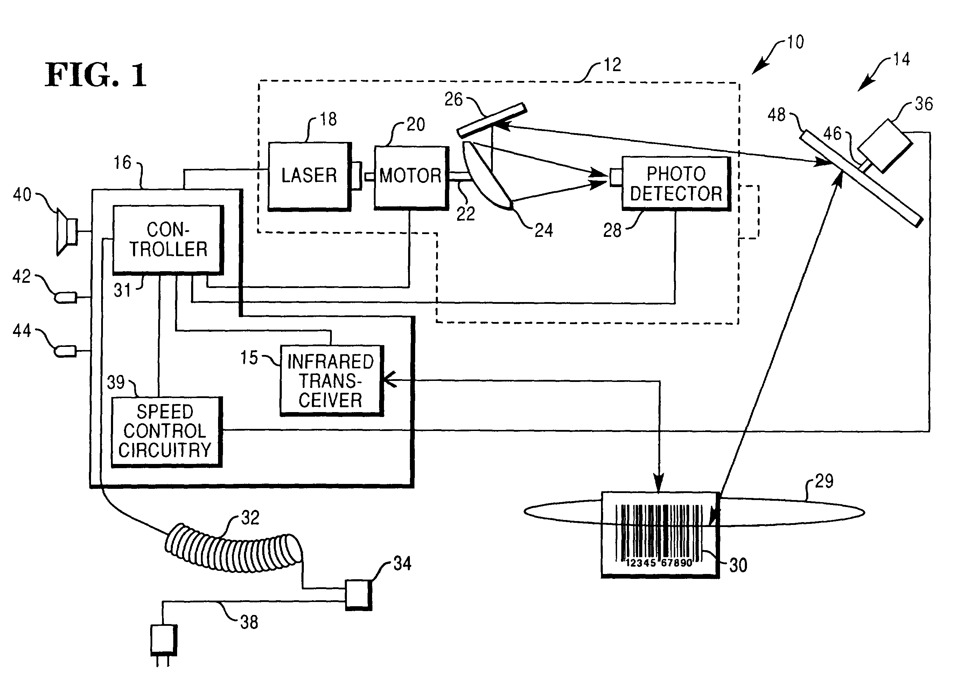

Referring now to Fig. 1, an optical scanner 10 containing an automatic sensing and programming circuit of the present invention is shown. The optical scanner 10 generates a substantially omnidirectional pattern and includes a scan module 12, a tilted mirror assembly 14, an infrared transceiver 15, and a printed circuit board (PCB) 16. The scan module 12 produces a first scan pattern and includes a laser 18, a motor 20 for driving a hollow shaft 22, an optical transceiver 24 mounted to the end of shaft 22, pattern generating mirrors 26, and a photodetector 28. The laser 18 projects a laser beam through the hollow drive shaft 22 to be deflected by transceiver 24 towards the pattern generating mirrors 26. The mirrors 26 deflect the first pattern towards the tilted mirror assembly 14 to produce a second scan pattern 29, which is substantially omnidirectional. Light reflected from a bar code label 30 is redirected towards the pattern generating mirrors 26. The pattern generating mirrors 26 direct the light at the transceiver 24 which directs the light to the photodetector 28.

The PCB 16 contains processing circuitry, including a controller 31, for decoding signals generated by the photodetector 28 and transmitting the decoded signals over a coiled cable 32 to a remote processing member 34. Power is supplied to the laser 18, motor 20, tilted mirror assembly motor 36, and photodetector 28 through an electrical plug 38 and cable 32. The motor 36 is coupled to speed control circuitry 39. The printed circuit board 16 additionally contains circuitry for operating a speaker 40, and green and red indicator lights 42 and 44, which represent valid and invalid reading operations, respectively.

The infrared transceiver 15 works in conjunction with the controller 31 to sense the presence of an item having a bar code label 30 in front of the scanner 10 and can be additionally used to scan programming instructions from programming labels and to transmit or receive programming instructions from another scanner.

The tilted mirror assembly 14 includes the motor 36 having drive a shaft 46 and a rotating reflecting mirror 48, which is offset-mounted to the drive shaft 46. Preferably, the motor 36 and the motor 20 rotate in opposite directions. The motor shaft 46 is oriented at an angle to the drive shaft 22, which preferably is forty-five degrees. In the preferred embodiment, the bar code label 30 may also be a programming tag for programming the speed of the motor 36. A feature of the scanner 10 is that the speed ratio of the motor 20 to the motor 36 is selectable.

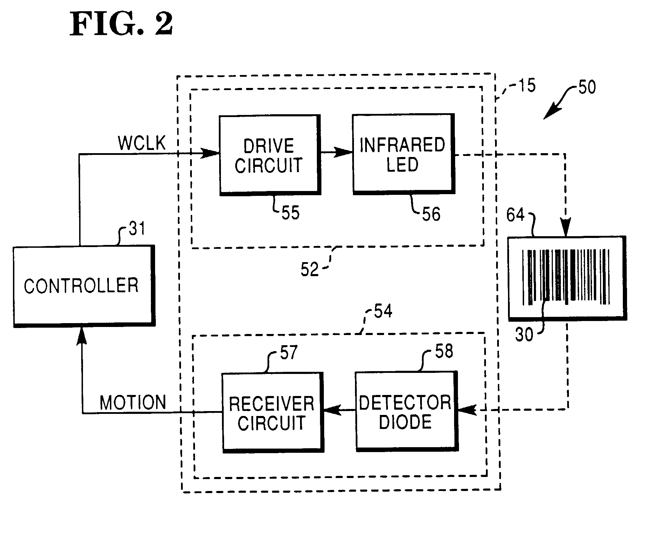

Referring now to Fig. 2, the automatic sensing and programming circuit 50 includes the controller 31 and infrared transceiver 15. The transceiver 15 includes an infrared transmitter 52 and an infrared receiver 54.

Preferably, the transmitter 52 includes a transistor drive circuit 55 and light-emitting diode (LED) 56. The drive circuit 55 produces a drive signal for driving the LED 56. The drive signal is modulated by a clock signal WCLK from the controller 31.

The receiver 54 includes a receiver circuit 57 and detector diode 58. The receiver circuit 57 is tuned to the modulation frequency of the signal emitted from the transmitter 52 to prevent ambient light or other infrared light sources from activating the scan module 12 and motor 36. Only signals within a predetermined range of the modulation frequency and having a predetermined minimum magnitude activate the scan module 12 and motor 36.

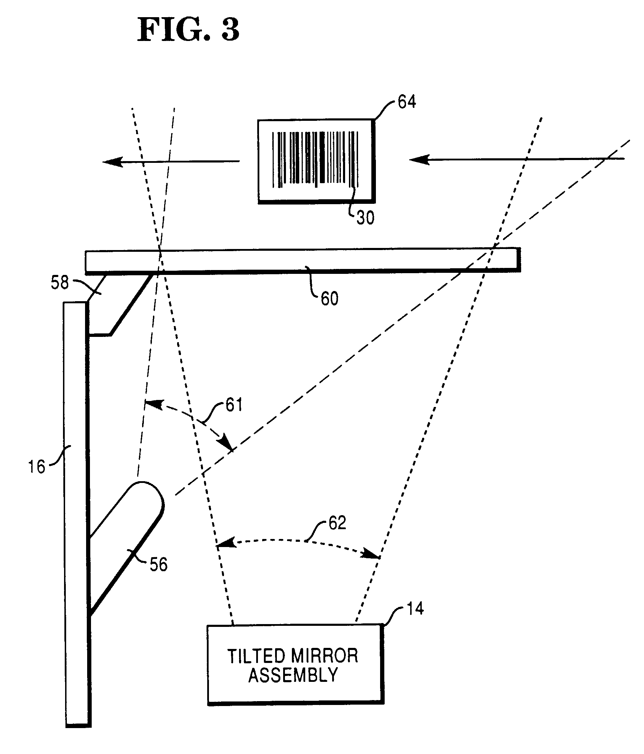

Turning now to Fig. 3, both the LED 56 and the detector diode 58 are mounted on one side of the PCB 16 inside the optical scanner 10. The LED 56 produces an illumination volume 61 and is mounted in a position to illuminate substantially all of the scanner's window 60 and to encompass substantially all of a scan volume 62. Thus, the scan module is activated about the same time that an item enters the scan volume 62. The detector diode 58 is mounted in a position to receive substantially all of the light reflected from a bar-code-bearing item 64.

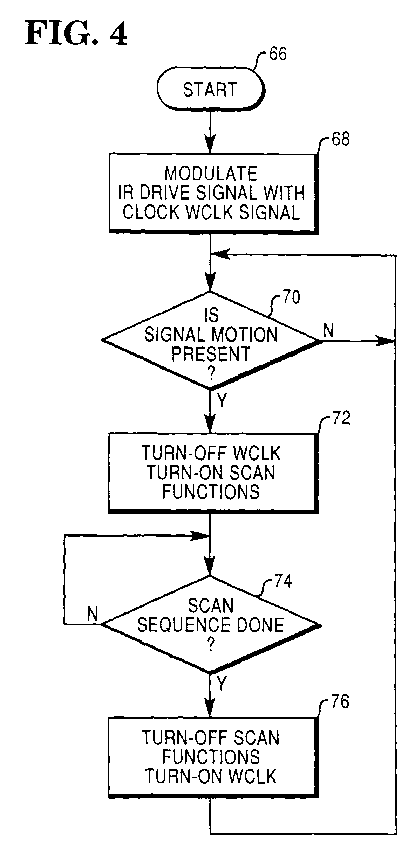

Referring now to Fig. 4, the role of the controller 31 in sensing movement of an item 64 is explained in more detail beginning with START block 66. In block 68, the controller 31 modulates the drive signal produced by the transmitter 52 with clock signal WCLK.

In block 70, the controller 31 awaits signal MOTION from the receiver 54. If the controller 31 senses signal MOTION due to the presence of the item 64 within the illumination volume 61, the controller 31 turns off the clock signal WCLK and activates the scan module 12 and motor 36 in block 72.

In the block 74, the controller 31 awaits the completion of a scanning sequence represented by the movement of the item 64 through the scan volume 62 and the end of a predetermined time period. If the scanning sequence is finished, the controller 31 turns off the scan module 12 and motor 36 and turns on the clock signal WCLK in block 76 and returns to block 70 to await another scan sequence.

The automatic sensing and programming circuit 50 may also be used to transfer programmed parameters from one optical scanner to another. Program tags are used to convert a first optical scanner into an emitting scanner and a second optical scanner into a receiving scanner. The program tags disable the laser 18 and scanner motors 20 and 36 in both scanners. The scanners are then oriented so that the emitting scanner faces the receiving scanner. The microcontroller 31 turns the transmitter 52 of the emitting scanner on and off to transfer data.

Under the programming method of the present invention, code words are constructed of digits corresponding to particular functions. Preferably, sixteen digits representing each hexadecimal digit ("0" through "F") are employed to construct the code words. These code words are stored in the memory of the controller 31, which also contains algorithms which recognize and decipher the code words.

Each digit of each code word consists of a predetermined sequence of data pulses. Preferably, each sequence is eight bits long and a "0" bit is represented by a pulse twice as wide as a pulse representing a "1" bit. To minimize the detection of false bits, the present invention employs a window of minimum and maximum pulse heights between which received signals must fall.

The reliability and robustness of the data transfer can be improved. For example, START and END pulses having unique pulse widths may be used. CHECK CHARACTER pulses may also be used. Finally, an ACKNOWLEDGEMENT pulse may be transmitted by the receiving scanner to signal good transmission, or bad transmission with an instruction to the emitting scanner to retransmit.

Use of the automatic sensing and programming circuit 50 instead of scan module 12 to transfer programming offers several advantages. Since the light from the LED 56 is already diffuse, no diffusers are required. The detector diode 58 is in a position to directly receive light from the LED 56 without the aid of sensitive optics. Finally, the LED 56 is more tolerant to drive voltage variation than the laser 18 and is more easily and reliably modulated.

The hexadecimal digits of the present invention may also be encoded as bar code labels and printed on tags to program scanners. Instead of using one tag for each function, the method of the present invention uses a predetermined number of tags as an alphabet for constructing code words corresponding to particular functions or sets of functions. These code words are stored in the memory of controller 31, which contains algorithms which recognize the code words. Preferably, sixteen tags representing each hexadecimal digit ("0" through "F") are employed.

Advantageously, the method of the present invention provides significant flexibility as the number of tags is limited. New options may be easily added since additional tags are not required.

In addition to the sixteen hexadecimal tags, five special tags are used, including PROGRAMMING MODE, DEFAULT, END, ABORT, and SAVE and RESET tags:
the PROGRAMMING MODE tag forces optical scanner 10 into a program mode;
the DEFAULT tag forces scanner 10 to perform a power up sequence so that defaults can take effect;
the END tag is used to end an input sequence when the final input value may not be obvious;
the ABORT tag is used to abort a programming input sequence or to abort the entire PROGRAMMING MODE and to revert to previous parameters; and
the SAVE and RESET tag saves all of the new programmed options and forces a power up sequence to allow the new parameters to take effect.

Additional tags, such as MACRO tags, may also be used. A MACRO tag is one which combines a number of option selections into one tag to save programming time.

For example, changing the frequency and duration of the good read tone, which is audible upon the scanner 10 reading a bar code label, requires that the first character of the corresponding program word consist of an identifier for good tone parameters, which is "10". The next character consists of an enable, which is "0". The next character identifies the desired frequency from a menu of frequency options, each menu item having a corresponding hexadecimal digit. Suppose that frequency menu item "1" is chosen. The last digit identifies the tone duration from a menu of duration options. Suppose the desired duration is identified by the character "2". The word resulting from the combination of these digits is "10012".

To implement the desired change in good read tone characteristics, tags containing bar code labels corresponding to each digit are scanned individually and in order. An algorithm within controller 31 decodes the word and implements the instructions.

The above, and other functions, such as scanner timeout period, bad read tone parameters, communication parameters, bar code decoding parameters, bar code options, and interface parameters, are also programmable under the method of the present invention employing a programming transceiver or the abovementioned tags.

## Claims

1. Optical scanner apparatus (10) comprising a housing, a scan module (12) for producing a scan pattern and directing said pattern through window means (60) in said housing to a scan region outside of said window means (60), first detector means (15) for detecting the passage of an article (64) to be scanned into said scan region and for providing a signal for initiating operation of said scan module (12) upon detection of said article (64), characterized by said first detector means (15) comprising light source means (56) arranged to generate a diffuse output (61) and to project said diffuse output (61) into said scan region, modulation means (55) for modulating said diffuse output (61), and second detector means (54), which are part of said first detector means (15), for initiating operation of said scan module, in response to detection of the modulated light output (61) reflected from said article (64), as said article (64) enters said scan region and wherein said light source means (56) is adapted to transmit a scanner-programming signal for programming another scanner apparatus when the optical scanner (10) apparatus is in a programming mode.

2. Apparatus according to claim 1, characterized in that said detector means (54) is adapted to receive scanner programming information from another scanner apparatus when the optical scanner (10) is in a programming mode.

3. Apparatus according to claim 1 or 2, characterized in that the scanning module (12) is deenergised when the optical scanner (10) is in a programming mode.

4. Apparatus according to claim 1, characterized in that the light source means (56) is adapted to output a pulsed signal in a programming mode, each pulse representing a predetermined hexadecimal digit.

5. Apparatus according to claim 2, characterized in that the optical scanner further comprises controlling means (31) for storing and decoding a pulsed signal received from the other scanner apparatus.

6. Apparatus according to claim 1, characterized in that said light source means is located inside said housing and said scanner-programming signal is a diffuse signal which is transmitted through said window means (60).

7. Apparatus according to any one of the preceding claims, characterized in that said diffuse output is directed so as to substantially encompass all of said scan region.

## Patentansprüche

1. Optische Abtastvorrichtung (10) aufweisend ein Gehäuse, ein Abtastmodul (12) zum Erzeugen eines Abtastmusters und Richten dieses Musters durch eine Fenstervorrichtung (60) in dem Gehäuse auf einen Abtastbereich außerhalb der Fenstervorrichtung (60), eine erste Detektorvorrichtung (15) zum Erfassen der Bewegung eines abzutastenden Gegenstands (64) in den Abtastbereich hinein und zum Liefern eines Signals zum Einleiten des Betriebs des Abtastmoduls (12) bei Erfassung des Gegenstands (64), gekennzeichnet durch
die erste Detektorvorrichtung (15), die eine Lichtquellenvorrichtung (56) umfaßt, die angeordnet ist, um eine diffuse Abgabe (61) zu erzeugen und diese diffuse Abgabe (61) in den Abtastbereich zu projizieren, eine Modulationsvorrichtung (55) zum Modulieren der diffusen Abgabe (61), und eine zweite Detektorvorrichtung (54), die Teil der ersten Detektorvorrichtung (15) sind, zum Einleiten des Betriebs des Abtastmoduls unter Ansprechen auf die Erfassung der von dem Gegenstand (64) reflektierten, modulierten Lichtabgabe (61), wenn der Gegenstand (64) in den Abtastbereich eintritt, und wobei die Lichtquellenvorrichtung (56) geeignet ist, ein Abtaster-Programmiersignal zum Programmieren eines anderen Abtastgerätes zu übertragen, wenn das optische Abtastgerät (10) sich in einem Programmiermodus befindet.

2. Vorrichtung nach Anspruch 1, dadurch gekennzeichnet, daß die Detektorvorrichtung (54) geeignet ist, Abtaster-Programmierinformationen von einem anderen Abtastgerät zu empfangen, wenn der optische Abtaster (10) sich in einem Programmiermodus befindet.

3. Vorrichtung nach Anspruch 1 oder 2, dadurch gekennzeichnet, daß das Abtastmodul (12) abgeschaltet ist, wenn der optische Abtaster (10) in einem Programmiermodus ist.

4. Vorrichtung nach Anspruch 1, dadurch gekennzeichnet, daß die Lichtquellenvorrichtung (56) geeignet ist, ein impulsgesteuertes Signal in einem Programmiermodus auszugeben, wobei jeder Impuls eine vorgegebene Sedezimalziffer darstellt.

5. Vorrichtung nach Anspruch 2, dadurch gekennzeichnet, daß der optische Abtaster ferner eine Steuerungsvorrichtung (31) zum Speichern und Entschlüsseln eines von dem anderen Abtastgerät erhaltenen impulsgesteuerten Signals aufweist.

6. Vorrichtung nach Anspruch 1, dadurch gekennzeichnet, daß die Lichtquellenvorrichtung innerhalb des Gehäuses gelegen ist und das Abtaster-Programmiersignal ein diffuses Signal ist, welches durch die Fenstervorrichtung (60) hindurch übertragen wird.

7. Vorrichtung nach einem der vorhergehenden Ansprüche, dadurch gekennzeichnet, daß die diffuse Abgabe so gerichtet ist, daß sie im wesentlichen den gesamten Abtastbereich umfaßt.

## Revendications

1. Un appareil de balayage optique (10) comprenant un boîtier, un module de balayage (12) pour produire un dessin de balayage et diriger ledit dessin vers une région de balayage hors dudit moyen fenêtre (60) en passant par un moyen fenêtre (60) dans ledit boîtier, un premier moyen détecteur (15) pour détecter le passage d'un article (64) à balayer dans ladite région de balayage et pour fournir un signal pour initier le fonctionnement dudit module de balayage (12) dès la détection dudit article (64), caractérisé en ce que ledit premier moyen détecteur (15) comprend un moyen source de lumière (56) arrangé pour générer une sortie diffuse (61) et pour projeter ladite sortie diffuse (61) dans ladite région de balayage, un moyen de modulation (55) pour moduler ladite sortie diffuse (61), et un deuxième moyen détecteur (54), qui font partie dudit premier moyen détecteur (15), pour initier le fonctionnement dudit module de balayage, en réponse à la détection de la sortie de lumière modulée (61) réfléchie à partir dudit article (64), au fur et à mesure que ledit article (64) entre dans ladite région de balayage et dans quoi ledit moyen source de lumière (56) est adapté pour transmettre un signal de programmation de dispositif de balayage pour programmer un autre appareil de balayage lorsque l'appareil de balayage optique (10) est dans un mode de programmation.

2. Un appareil conformément à la revendication 1, caractérisé en ce que ledit moyen détecteur (54) est adapté pour recevoir des informations de programmation de dispositif de balayage à partir d'un autre appareil de balayage lorsque le dispositif de balayage optique (10) est dans un mode de programmation.

3. Un appareil conformément à la revendication 1 ou 2, caractérisé en ce que le module de balayage (12) est désexcité lorsque le dispositif de balayage optique (10) est dans un mode de programmation.

4. Un appareil conformément à la revendication 1, caractérisé en ce que le moyen source de lumière (56) est adapté pour sortir un signal pulsé dans un mode de programmation, chaque impulsion représentant un chiffre hexadécimal prédéterminé.

5. Un appareil conformément à la revendication 2, caractérisé en ce que le dispositif de balayage optique comprend encore un moyen de contrôle (31) pour mémoriser et décoder un signal pulsé reçu de l'autre appareil de balayage.

6. Un appareil conformément à la revendication 1, caractérisé en ce que ledit moyen source de lumière est situé à l'intérieur dudit boîtier et en ce que ledit signal de programmation de dispositif de balayage est un signal diffus qui est transmis à travers ledit moyen fenêtre (60).

7. Un appareil conformément à l'une quelconque des revendications précédentes, caractérisé en ce que ladite sortie diffuse est dirigée de façon à renfermer substantiellement l'ensemble de ladite région de balayage.
